# EUROPÄISCHE PATENTSCHRIFT

(11) **EP 3 728 829 B1**
(45) Veröffentlichungstag und Bekanntmachung des Hinweises auf die Patenterteilung: **20.11.2024**
(21) Anmeldenummer: 18829258.5
(22) Anmeldetag: 12.12.2018
(51) Int. Cl.: F02N 11/08, F02N 11/04, F16F 15/131, F02B 67/06, F16H 7/00, B60W 30/18, F02N 15/08

(54) **VERFAHREN ZUM BETRIEB EINER MIT EINEM ZWEIMASSENSCHWUNGRAD UND MIT EINER START-STOPP FUNKTION AUSGESTATTETEN VERBRENNUNGSKRAFTMASCHINE**
METHOD FOR OPERATING AN INTERNAL COMBUSTION ENGINE PROVIDED WITH A DUAL-MASS FLYWHEEL AND WITH A START-STOP FUNCTION
PROCÉDÉ DE FONCTIONNEMENT D'UN MOTEUR À COMBUSTION INTERNE POURVU D'UN VOLANT À DEUX MASSES ET D'UNE FONCTION DE DÉMARRAGE ET D'ARRÊT AUTOMATIQUE

(30) Priorität: 18.12.2017 DE 102017222980
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: HORN, Hauke, 31228 Peine (DE); FRÖHLICH, Björn, 38518 Gifhorn (DE); LOOF, Holger, 38173 Sickte (DE)
(86) Internationale Anmeldenummer: PCT/EP2018/084572
(87) Internationale Veröffentlichungsnummer: WO 2019/121244

(56) Entgegenhaltungen:
- DE-A1- 102008 004 223
- DE-A1- 102008 013 411
- DE-A1- 102009 045 886
- GB-A- 2 489 499

## Beschreibung

Die Erfindung betrifft ein Verfahren zum Betrieb einer Verbrennungskraftmaschine. Das Verfahren kann in einem Kraftfahrzeug durchgeführt werden.

Verbrennungskraftmaschinen können mit einem Starter-Generator gekoppelt sein. Ein Starter-Generator vereint die Funktionen von Anlasser und Lichtmaschine in einer einzigen elektrischen Maschine. Er kann damit sowohl den Verbrennungsmotor eines Kraftfahrzeugs beschleunigen (Startbetrieb), als auch bei laufendem Motor elektrischen Strom erzeugen (Generatorbetrieb). Moderne, leistungsstarke Starter-Generatoren können z. B. in Hybridelektrokraftfahrzeugen Energie sparen, indem sie beim Abbremsen des Fahrzeugs elektrische Energie in die Fahrzeugbatterie zurückspeisen und diese Energie später verwenden, um den Verbrennungsmotor zu entlasten oder zu unterstützen, wenn besonders viel Energie benötigt wird, beispielsweise beim Beschleunigen.

Als Starter-Generatoren kommen riemengetriebene Starter-Generatoren und Kurbelwellen-Starter-Generatoren zum Einsatz.

Riemengetriebene Starter-Generatoren oder Riemen-Starter-Generatoren (RSG, englisch: *Belt-Driven Starter Generator* (BSG), oder *Belt-Driven Integrated Starter Generator* (B-ISG)) werden, wie eine herkömmliche Lichtmaschine, mittels Riementrieb mit dem Verbrennungsmotor gekoppelt.

Kurbelwellen-Starter-Generatoren (KSG, englisch: *Crankshaft-Mounted Integrated Starter Generator* (C-ISG)) sitzen zwischen Verbrennungsmotor und Getriebe direkt auf der Kurbelwelle. Die übertragbare Leistung ist im Wesentlichen nur durch die Leistungsfähigkeit des Startergenerators oder des Umrichters begrenzt.

Starter-Generatoren kommen unter anderem auch in Betriebsbereichen der Verbrennungskraftmaschine zum Einsatz, in denen ein Start/Stopp-Betrieb vorliegt und eine Abschaltung der Verbrennungskraftmaschine erfolgt ist, wobei eine Drosselklappe einer Einlassseite der Verbrennungskraftmaschine geschlossen ist und eine aktuelle Drehzahl der Verbrennungskraftmaschine größer null ist und abnimmt. Erfolgt in diesem Betriebsbereich eine Anforderung zum erneuten Start der Verbrennungskraftmaschine, können, ausgehend von einer hohen Drehzahl und hin zu einer geringeren Drehzahl, bestimmte Randbedingungen in folgender Reihenfolge berücksichtigt werden:
Oberhalb einer ersten Drehzahlgrenze kann ein Start der Verbrennungskraftmaschine und Betrieb der Verbrennungskraftmaschine über eine Drehzahlregelung erfolgen. Hier kann ein Starter-Generator zum Antrieb der Verbrennungskraftmaschine als Unterstützung eingesetzt werden. Der Starter-Generator kann dabei zeitgleich mit der Verbrennungskraftmaschine angesteuert werden.
Ausgehend bzw. unterhalb von der ersten Drehzahlgrenze und oberhalb einer zweiten Drehzahlgrenze kann ein Betrieb eines Starter-Generators ausgeschlossen sein und die Verbrennungskraftmaschine wird alleine bzw. autark betrieben. In diesem Drehzahlfenster kann es vorkommen, dass z. B. ein Zweimassenschwungrad in unerwünschter Weise aufschwingt und dadurch beschädigt wird.
Ausgehend bzw. unterhalb von der zweiten Drehzahlgrenze und oberhalb einer dritten Drehzahlgrenze kann ein Start der Verbrennungskraftmaschine und zeitgleich eine Ansteuerung des Starter-Generators erfolgen.
Ausgehend bzw. unterhalb von der dritten Drehzahlgrenze und bis zu einer Drehzahl von null Umdrehungen pro Minute wird ein Stillstand der Verbrennungskraftmaschine abgewartet und nach Erkennen des Stillstands ein Antrieb der Verbrennungskraftmaschine alleine über den Starter-Generator eingeleitet.

Die Patentanmeldungen DE 10 2009 045886 A1 und GB 2 489 499 A sind interessante Dokumente aus dem Stand der Technik.

Es ist nun beobachtet worden, dass eine Ansteuerung des Starter-Generators bei einer aktuellen Drehzahl, die (knapp) oberhalb der ersten Drehzahlgrenze liegt, zu Startabbrüchen (also Wiederabschaltung der Verbrennungskraftmaschine) und Schädigungen des Zweimassenschwungrads führen kann.

Aufgabe der vorliegenden Erfindung ist es, die mit Bezug auf den Stand der Technik angeführten Probleme zumindest teilweise zu lösen. Insbesondere soll ein Verfahren zum Betrieb einer Verbrennungskraftmaschine vorgeschlagen werden, durch das in dem genannten Betriebsbereich Startabbrüche und Schädigungen von Komponenten eines Antriebsstranges eines Kraftfahrzeuges verhindert werden können.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zum Betrieb einer Verbrennungskraftmaschine vorgeschlagen, wobei die Verbrennungskraftmaschine über einen Starter-Generator antreibbar bzw. mit einem Starter-Generator gekoppelt ist. Das Verfahren wird in zumindest einem Betriebsbereich der Verbrennungskraftmaschine durchgeführt, wobei in diesem Betriebsbereich ein Start/Stopp-Betrieb (also ein automatisches - nicht ausschließlich durch einen Fahrer initiiertes - Abschalten und ggf. Neustarten der Verbrennungskraftmaschine) vorliegt und eine Abschaltung der Verbrennungskraftmaschine (gerade) erfolgt ist. In diesem Betriebsbereich ist eine Drosselklappe geschlossen und eine aktuelle Drehzahl der Verbrennungskraftmaschine (also einer Kurbelwelle der Verbrennungskraftmaschine) ist größer null und nimmt ab. Die aktuelle Drehzahl ist größer als ein Drehzahlfenster (also insbesondere größer als ein oberer Grenzwert davon bzw. eine erste Drehzahlgrenze), in dem ein Antrieb der Verbrennungskraftmaschine über den Starter-Generator zum Schutz der Verbrennungskraftmaschine ausgeschlossen ist.

Das Verfahren weist zumindest die folgenden Schritte auf:
a) Feststellen des Vorliegens des Betriebsbereichs;
b) Feststellen einer Anforderung zum Antrieb der Verbrennungskraftmaschine;
c) zunächst erste Ansteuerung des Starter-Generators bis der Starter-Generator zum Antrieb der Verbrennungskraftmaschine eine Drehmomentschwelle zumindest erreicht hat; und
d) dann zweite Ansteuerung der Verbrennungskraftmaschine.

Die Verbrennungskraftmaschine wird insbesondere über Selbstzündung (z. B. Dieselmotor) oder Fremdzündung (z. B. Benzinmotor) angetrieben.

Der Start/Stopp-Betrieb dient der Einsparung von Kraftstoff und der damit verbundenen Reduzierung von Schadstoffen. Dabei wird die Verbrennungskraftmaschine während eines Schubbetriebs des Kraftfahrzeuges abgeschaltet (Stopp) und Zündvorgänge werden eingestellt. Insbesondere wird dazu eine die Luftzufuhr zu den Brennkammern regulierende Drosselklappe geschlossen, so dass keine Luft den Brennkammern zugeführt wird.

Im Gegensatz zu bekannten Verfahren, bei denen oberhalb der ersten Drehzahlgrenze die Verbrennungskraftmaschine gestartet und gleichzeitig der Starter-Generator angesteuert wird (und damit ein Drehmoment zum Antrieb der Verbrennungskraftmaschine bzw. der Kurbelwelle übertragen wird), wird hier vorgeschlagen, zunächst ausschließlich den Starter-Generator zum Antrieb der Verbrennungskraftmaschine einzusetzen. Erst zu einem späteren Zeitpunkt wird dann die Verbrennungskraftmaschine angesteuert und gestartet (d. h. es werden erst dann Zündvorgänge eingeleitet).

Die erste Ansteuerung des Startgenerators und die zweite Ansteuerung der Verbrennungskraftmaschine erfolgen zeitlich versetzt. Die zweite Ansteuerung ist also der ersten Ansteuerung nachfolgend, wobei ggf. eine unmittelbar anschließende oder um einen Verzögerungszeitraum verspätete Einleitung der zweiten Ansteuerung erfolgen kann.

Insbesondere wird während Schritt d) und nach dem Start der Verbrennungskraftmaschine ein Antrieb der Verbrennungskraftmaschine durch den Starter-Generator (wieder) beendet.

Bevorzugt wird die Drosselklappe erst in Schritt d) (wieder) geöffnet, so dass Luft mindestens einer Brennkammer der Verbrennungskraftmaschine zugeführt werden kann.

Bevorzugt ist die aktuelle Drehzahl höchstens 5 %, insbesondere höchstens 2 %, größer als eine höchste Drehzahl des Drehzahlfensters.

Insbesondere kann bei einer aktuellen Drehzahl, die um mehr als 5 % größer als die höchste Drehzahl des Drehzahlfensters ist, eine zeitgleiche Ansteuerung von Verbrennungskraftmaschine und Starter-Generator erfolgen.

Insbesondere ist der Starter-Generator ein Riemen-Starter-Generator.

Gerade bei einem Riemen-Starter-Generator können die eingangs beschriebenen Probleme aufgrund einer mechanischen Entkopplungseinheit (Decoupler) auftreten. Die Übertragung eines Drehmoments zum Antrieb der Verbrennungskraftmaschine vom Riemen-Starter-Generator auf die Verbrennungskraftmaschine erfolgt, insbesondere aufgrund der mechanischen Entkopplung über den Decoupler, zeitlich verzögert. Weiter wird bei paralleler Ansteuerung der Verbrennungskraftmaschine die Drosselklappe geöffnet und zumindest eine Brennkammer mit Luft gefüllt. Aufgrund der in die Brennkammer eingebrachten Luft wird die aktuelle Drehzahl schneller reduziert. Während der zeitlichen Verzögerung bei der Übertragung des Drehmoments von dem Riemen-Starter-Generator kann die aktuelle Drehzahl aber weiter in das Drehzahlfenster hinein absinken (und die erste Drehzahlgrenze bzw. die höchste Drehzahl unterschreiten). Erfolgt erst zu diesem Zeitpunkt dann die Übertragung des Drehmoments, kann ein Aufschwingen des Zweimassenschwungrads erfolgen und eine Schädigung von Komponenten der Verbrennungskraftmaschine auftreten.

Insbesondere ist in dem Drehzahlfenster ein Antrieb der Verbrennungskraftmaschine über den Starter-Generator aufgrund einer Möglichkeit einer Schwingungsanregung eines Zweimassenschwungrads ausgeschlossen.

Es wird weiter ein Kraftfahrzeug mit einer Verbrennungskraftmaschine, einem Starter-Generator zum Antrieb der Verbrennungskraftmaschine sowie einer Steuereinheit vorgeschlagen. Insbesondere ist in einer Luft-Zuleitung der Verbrennungskraftmaschine eine Drosselklappe angeordnet. Insbesondere umfasst die Verbrennungskraftmaschine ein Zweimassenschwungrad. Die Steuereinheit ist zur Durchführung des vorstehend beschriebenen Verfahrens (vorgesehen und) eingerichtet bzw. das Verfahren kann mit der Steuereinheit durchgeführt werden.

Die Ausführungen zu dem Verfahren gelten gleichermaßen für das Kraftfahrzeug und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug mit einer Verbrennungskraftmaschine, und
- Fig. 2:: ein Diagramm, in dem eine Drehzahl und ein Drehmoment über der Zeit aufgetragen sind.

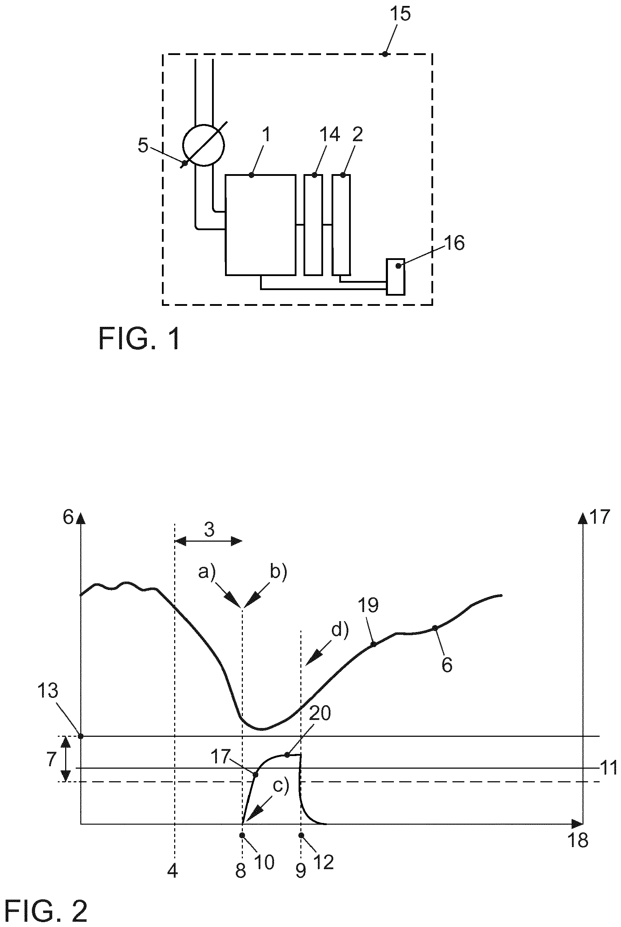

Die Figur 1 zeigt ein Kraftfahrzeug 15 mit einer Verbrennungskraftmaschine 1, einem Starter-Generator 2 zum Antrieb der Verbrennungskraftmaschine 1 sowie einer Steuereinheit 16. In einer Luft-Zuleitung der Verbrennungskraftmaschine 1 ist eine Drosselklappe 5 angeordnet. Die Verbrennungskraftmaschine 1 umfasst ein Zweimassenschwungrad 14.

Fig. 2 zeigt ein Diagramm, in dem eine Drehzahl 6 und ein Drehmoment 17 (auf den vertikalen Achsen) über der Zeit 18 (horizontale Achse) aufgetragen sind. Die erste Kurve 19 zeigt den Verlauf einer aktuellen Drehzahl 6 während eines Start/Stopp-Vorgangs. Die zweite Kurve 20 zeigt den Verlauf des Drehmoments 17, der von dem Starter-Generator 2 auf die Verbrennungskraftmaschine übertragen wird.

Das Verfahren wird in einem Betriebsbereich 3 der Verbrennungskraftmaschine 1 durchgeführt, wobei in diesem Betriebsbereich 3 ein Start/Stopp-Betrieb vorliegt und eine Abschaltung 4 der Verbrennungskraftmaschine 1 erfolgt ist. In diesem Betriebsbereich 3 ist eine Drosselklappe 5 geschlossen und eine aktuelle Drehzahl 6 der Verbrennungskraftmaschine 1 ist größer null und nimmt weiter ab. Die aktuelle Drehzahl 6 ist größer als ein Drehzahlfenster 7 (also größer als eine erste Drehzahlgrenze bzw. als eine höchste Drehzahl 13 des Drehzahlfensters 7), in dem ein Antrieb der Verbrennungskraftmaschine 1 über den Starter-Generator 2 zum Schutz der Verbrennungskraftmaschine 1 ausgeschlossen ist.

In einem Schritt a) erfolgt das Feststellen des Vorliegens des Betriebsbereichs 3. In einem Schritt b) erfolgt das Feststellen einer Anforderung 8 zum Antrieb der Verbrennungskraftmaschine 1. In einem Schritt c) erfolgt zunächst eine erste Ansteuerung 10 des Starter-Generators 2, bis der Starter-Generator 2 zum Antrieb der Verbrennungskraftmaschine 1 eine Drehmomentschwelle 11 zumindest erreicht hat. In einem auf den Schritt c) folgenden Schritt d) erfolgt eine zweite Ansteuerung 12 der Verbrennungskraftmaschine 1.

Während Schritt d) und nach dem Start 9 der Verbrennungskraftmaschine 1 wird ein Antrieb der Verbrennungskraftmaschine 1 durch den Starter-Generator 2 wieder beendet.

### Bezugszeichenliste

- 1: Verbrennungskraftmaschine
- 2: Starter-Generator
- 3: Betriebsbereich
- 4: Abschaltung
- 5: Drosselklappe
- 6: Drehzahl
- 7: Drehzahlfenster
- 8: Anforderung
- 9: Start
- 10: erste Ansteuerung
- 11: Drehmomentschwelle
- 12: zweite Ansteuerung
- 13: höchste Drehzahl
- 14: Zweimassenschwungrad
- 15: Kraftfahrzeug
- 16: Steuereinheit
- 17: Drehmoment
- 18: Zeit
- 19: erste Kurve
- 20: zweite Kurve

## Patentansprüche

1. Verfahren zum Betrieb einer Verbrennungskraftmaschine (1), die über einen Starter-Generator (2) antreibbar ist, in zumindest einem Betriebsbereich (3), wobei in diesem Betriebsbereich (3) ein Start/Stopp-Betrieb vorliegt und eine Abschaltung (4) der Verbrennungskraftmaschine (1) erfolgt ist, wobei eine Drosselklappe (5) geschlossen ist und eine aktuelle Drehzahl (6) der Verbrennungskraftmaschine (1) größer null ist und abnimmt; wobei die aktuelle Drehzahl (6) größer als ein Drehzahlfenster (7) ist, in dem ein Antrieb der Verbrennungskraftmaschine (1) über den Starter-Generator (2), aufgrund einer Möglichkeit einer Schwingungsanregung eines Zweimassenschwungrads (14), zum Schutz der Verbrennungskraftmaschine (1) ausgeschlossen ist; wobei das Verfahren zumindest die folgenden Schritte aufweist:
a) Feststellen des Vorliegens des Betriebsbereichs (3);
b) Feststellen einer Anforderung (8) zum Antrieb der Verbrennungskraftmaschine (1);
c) zunächst Ansteuerung (10) des Starter-Generators (2), wobei damit ein Drehmoment zum Antrieb der Verbrennungskraftmaschine übertragen wird, bis der Starter-Generator (2) zum Antrieb der Verbrennungskraftmaschine (1) eine Drehmomentschwelle (11) zumindest erreicht hat; und dann
d) Ansteuerung (12) der Verbrennungskraftmaschine (1), wobei Zündvorgänge eingeleitet und die Verbrennungskraftmaschine (1) gestartet wird.

2. Verfahren nach Patentanspruch 1, wobei während Schritt d) und nach dem Start (9) der Verbrennungskraftmaschine (1) ein Antrieb der Verbrennungskraftmaschine (1) durch den Starter-Generator (2) beendet wird.

3. Verfahren nach einem der vorhergehenden Patentansprüche, wobei die Drosselklappe (5) erst in Schritt d) geöffnet wird.

4. Verfahren nach einem der vorhergehenden Patentansprüche, wobei die aktuelle Drehzahl (6) höchstens 5 % größer ist als eine höchste Drehzahl (13) des Drehzahlfensters (7).

5. Verfahren nach einem der vorhergehenden Patentansprüche, wobei der Starter-Generator (2) ein Riemen-Starter-Generator ist.

6. Kraftfahrzeug (15) mit einer Verbrennungskraftmaschine (1), einem Starter-Generator (2) zum Antrieb der Verbrennungskraftmaschine (1), einem Zweimassenschwungrad (14) sowie einer Steuereinheit (16); wobei die Steuereinheit (16) zur Durchführung des Verfahrens nach einem der vorhergehenden Patentansprüche eingerichtet ist.

## Claims

1. Method for operating an internal combustion engine (1), which can be driven via a starter-generator (2), in at least one operating range (3), wherein there is a start/stop operation in this operating range (3) and a shutdown (4) of the internal combustion engine (1) takes place, wherein a throttle valve (5) is closed and a current speed (6) of the internal combustion engine (1) is greater than zero and decreasing; wherein the current speed (6) is greater than a speed window (7) in which a drive of the internal combustion engine (1) via the starter-generator (2) is excluded due to a possibility of vibration excitation of a dual-mass flywheel (14) in order to protect the internal combustion engine (1); wherein the method comprises at least the following steps:
a) determining the existence of the operating range (3);
b) determining a requirement (8) for driving the internal combustion engine (1);
c) firstly, controlling (10) the starter-generator (2), wherein a torque is thus transmitted to drive the internal combustion engine until the starter-generator (2) has at least reached a torque threshold (11) to drive the internal combustion engine (1); and then
d) controlling (12) the internal combustion engine (1), wherein ignition processes are initiated and the internal combustion engine (1) is started.

2. Method according to claim 1, wherein during step d) and after the start (9) of the internal combustion engine (1), a drive of the internal combustion engine (1) by the starter-generator (2) is terminated.

3. Method according to either of the preceding claims, wherein the throttle valve (5) is only opened in step d).

4. Method according to any of the preceding claims, wherein the current speed (6) is at most 5 % greater than a highest speed (13) of the speed window (7).

5. Method according to any of the preceding claims, wherein the starter-generator (2) is a belt starter-generator.

6. Motor vehicle (15) comprising an internal combustion engine (1), a starter-generator (2) for driving the internal combustion engine (1), a dual-mass flywheel (14) and a control unit (16); wherein the control unit (16) is configured to carry out the method according to any of the preceding claims.

## Revendications

1. Procédé permettant de faire fonctionner un moteur à combustion interne (1) qui peut être entraîné par l'intermédiaire d'un démarreur-générateur (2) dans au moins une plage de fonctionnement (3), dans lequel il existe un mode marche/arrêt dans cette plage de fonctionnement (3) et une désactivation (4) du moteur à combustion interne (1) a lieu, dans lequel une soupape d'étranglement (5) est fermée et un régime effectif (6) du moteur à combustion interne (1) est supérieur à zéro et diminue ; dans lequel le régime effectif (6) est supérieur à une fenêtre de régime (7) dans laquelle un entraînement du moteur à combustion interne (1) par l'intermédiaire du démarreur-générateur (2) est exclu en raison d'une possibilité d'excitation vibratoire d'un volant d'inertie bimasse (14) pour protéger le moteur à combustion interne (1) ; dans lequel le procédé présente au moins les étapes suivantes :
a) détermination de l'existence de la plage de fonctionnement (3) ;
b) détermination d'une demande (8) d'entraînement du moteur à combustion interne (1) ;
c) tout d'abord, commande (10) du démarreur-générateur (2), dans lequel un couple est ainsi transmis pour l'entraînement du moteur à combustion interne jusqu'à ce que le démarreur-générateur (2) ait au moins atteint un seuil de couple (11) pour l'entraînement du moteur à combustion interne (1) ; puis
d) commande (12) du moteur à combustion interne (1), dans lequel des processus d'allumage sont initiés et le moteur à combustion interne (1) est démarré.

2. Procédé selon la revendication 1, dans lequel, pendant l'étape d) et après le démarrage (9) du moteur à combustion interne (1), un entraînement du moteur à combustion interne (1) par le démarreur-générateur (2) est arrêté.

3. Procédé selon l'une des revendications précédentes, dans lequel la soupape d'étranglement (5) n'est ouverte qu'à l'étape d).

4. Procédé selon l'une des revendications précédentes, dans lequel le régime effectif (6) est supérieur d'au plus 5 % à un régime maximal (13) de la fenêtre de régime (7).

5. Procédé selon l'une des revendications précédentes, dans lequel le démarreur-générateur (2) est un démarreur-générateur à courroie.

6. Véhicule automobile (15) comportant un moteur à combustion interne (1), un démarreur-générateur (2) destiné à l'entraînement du moteur à combustion interne (1), un volant d'inertie bimasse (14) ainsi qu'une unité de commande (16) ; dans lequel l'unité de commande (16) est conçue pour mettre en oeuvre le procédé selon l'une des revendications précédentes.
